# EUROPEAN PATENT APPLICATION

(11) **EP 2 575 238 A2**
(43) Date of publication of application: **03.04.2013**
(21) Application number: 12178395.5
(22) Date of filing: 27.07.2012
(51) Int. Cl.: H02K 1/28

(54) **Rotor assembly**

(30) Priority: 28.09.2011 US 201113247410
(71) Applicant: Hamilton Sundstrand Corporation, Windsor Locks, CT 06096-1010 (US)
(72) Inventor: Shepard, Charles, Dekalb, IL Illinois 60115 (US); Picard, James Wilhelm, Rockford, 61114 (US)
(74) Representative: Tomlinson, Kerry John

(57) **Abstract**

A rotor assembly (12) for an electric machine (10) includes an outer sleeve (20) and a plurality of permanent magnets (22) disposed in the outer sleeve. An inner sleeve (26) is located inboard of the plurality of permanent magnets and includes a plurality of inner sleeve segments (28) that form a tapered inner sleeve surface (34). A rotor shaft (30) is located inboard of the inner sleeve and has a tapered outer shaft surface (32) engageable with the tapered inner sleeve surface (34) in an interference fit to force the plurality of inner sleeve segments (28) into engagement with the plurality of permanent magnets (22).

## Description

### BACKGROUND OF THE INVENTION

The subject matter disclosed herein relates to electric machines. More specifically, the subject matter disclosed herein relates to rotor construction for electric machines.

In a typical electric machine, rotor assemblies are assembled to have an interference fit between components. The components typically include a shaft (or hub), a plurality of permanent magnets around the rotor inner sleeve, and an outer sleeve around the plurality of permanent magnets to contain the assembly of the magnets. The interference fit is often achieved via thermal expansion, by heating one part, for example, the rotor outer sleeve, while cooling a mating part, for example, the rotor shaft. In some rotor assemblies, however, for example those including a carbon outer sleeve to contain the assembly, the appropriate interference fit cannot be achieved via thermal expansion.

### BRIEF DESCRIPTION OF THE INVENTION

A rotor assembly for an electric machine includes an outer sleeve and a plurality of permanent magnets disposed in the outer sleeve. An inner sleeve is located inboard of the plurality of permanent magnets and includes a plurality of inner sleeve segments that form a tapered inner sleeve surface. A rotor shaft is located inboard of the inner sleeve and has a tapered outer shaft surface engageable with the tapered inner sleeve surface in an interference fit to force the plurality of inner sleeve segments into engagement with the plurality of permanent magnets.

A method of assembling a rotor for an electric machine includes arranging a plurality of permanent magnets inside of an annular outer sleeve and arranging a plurality of inner sleeve segments in the outer sleeve radially inward of the plurality of permanent magnets. The inner sleeve segments have a tapered inner sleeve surface. A rotor shaft is urged into the outer sleeve from one axial end of the outer sleeve and a tapered outer shaft surface of the rotor shaft engages with the tapered inner sleeve surface thereby urging the inner sleeve segments radially outwardly. The plurality of permanent magnets is retained in the outer sleeve via the engagement between the outer shaft surface and the inner sleeve surface.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

FIG. 1 is a cross-sectional view of an embodiment of an electric machine;

FIG. 2 is a cross-sectional view of an embodiment of a rotor for an electric machine;

FIG. 3 is an end view of an embodiment of a rotor for an electric machine; and

FIG. 4 is a cross-sectional view of another embodiment of an electric machine.

The detailed description explains embodiments of the invention, together with advantages and features, by way of example with reference to the drawings.

### DETAILED DESCRIPTION OF THE INVENTION

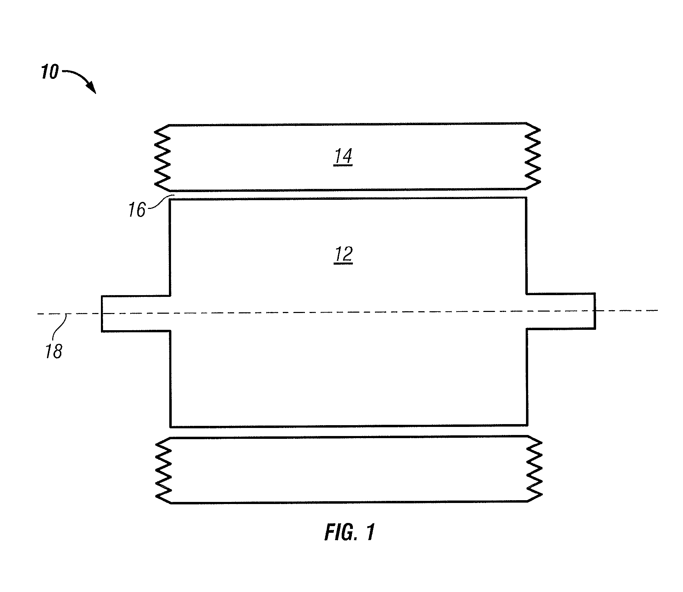

FIG. 1 shows a cross-sectional view of a permanent magnet electric machine 10. The electric machine 10 includes a rotor assembly 12 and a stator 14 surrounding at least a portion of the rotor assembly 12 such that an air gap 16 exists between the rotor assembly 12 and the stator 14. The rotor assembly 12 is located to be rotatable about an axis such as central axis 18.

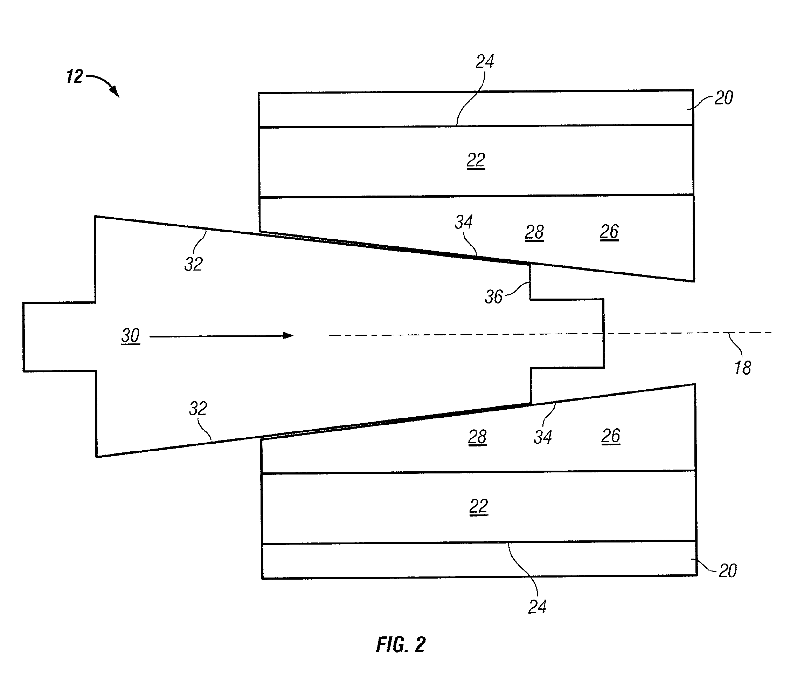

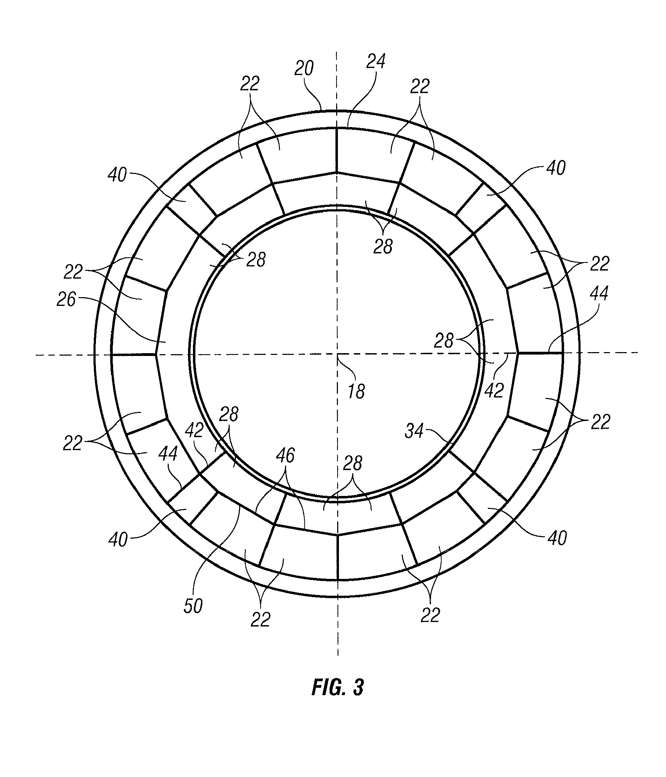

Referring now to FIG. 2, the rotor assembly 12 includes an outer sleeve 20 forming an outer periphery of the rotor assembly 12. The outer sleeve 20 may be a unitary component, and is substantially annular. In some embodiments, the outer sleeve 20 is formed of a carbon fiber or other composite material. A plurality of permanent magnets 22 are positioned at or near an inner surface 24 of the outer sleeve 20. As shown in FIG. 3, the permanent magnets 22 are arranged circumferentially around the inner surface 24 to form an annular (segmented) shape inside of the outer sleeve 20. A multitude of permanent magnets 22 are shown in four groups, indicating a 4-pole rotor assembly 12. It is to be appreciated that the number of permanent magnets 22 shown is merely exemplary. Further, even though a 4-pole electric machine 10 is illustrated, the electric machine may be, for example, a two pole, six pole or eight pole electric machine 10. In some embodiments, a nonmagnetized spacer 40 is located between adjacent pole groupings.

In FIG. 3, an inner sleeve 26 is positioned radially inboard of the permanent magnets 22. The inner sleeve 26 includes a plurality of inner sleeve segments 28, for example 10 or 20 inner sleeve segments 28 for a 4-pole rotor assembly 12 having 20 magnets or 16 or 32 inner sleeve segments 28 for a 8-pole rotor assembly 12 having 32 or 40 magnets, and are formed from a metal or other material able to withstand the forces of rotor 12 assembly. The number of inner sleeve segments 28 discussed herein is merely exemplary, but in some embodiments the number of inner sleeve segments is at least one half on the number of permanent magnets 22 so that each inner sleeve segment 28 supports at least one permanent magnet 22. Further, in some embodiments the inner sleeve segments 28 may include a coating applied to a sleeve inner surface 34 to reduce friction during assembly. The inner sleeve segments 28 are arranged circumferentially to form the inner sleeve 26. In some embodiments, sleeve split lines 42 between adjacent inner sleeve segments 28 are aligned with magnet split lines 44 between adjacent permanent magnets 22 to reduce bending stresses on the permanent magnets 22 along a circumferential direction during assembly. Further, in some embodiments, a magnet inner surface 46 of individual permanent magnets 22 is planar to reduce bending stressed in the permanent magnets 22 and in some embodiments a sleeve segment outer surface 50 of individual inner sleeve segments 28 may also be planar.

Referring again to FIG. 2, the rotor assembly 12 includes a rotor shaft 30 located at the central axis 18 and extending radially outwardly to engage the inner sleeve 26. An outer shaft surface 32, which may also be coated, is tapered along an axial length of the rotor shaft 30, in some embodiments at an angle of less than 1 degree. The corresponding inner sleeve inner surface 34 is likewise tapered. In a free state the inner sleeve inner surface 34 is at a smaller diameter than a widest portion of the outer shaft surface 32. To assemble the rotor assembly 12, the permanent magnets 22 and inner sleeve segments 28 are arranged inside the outer sleeve 20. The rotor shaft 30 is inserted into the rotor assembly 12 from one axial end, with a narrow axial end 36 inserted first. As the rotor shaft 30 is inserted, the taper on the outer shaft surface 32 forces the inner sleeve segments 28 radially outwardly into contact with the permanent magnets 22 and likewise forces the permanent magnets 22 radially outwardly into contact with the outer sleeve 20. When fully installed, the tapered outer shaft surface 32 and the tapered inner sleeve inner surface 34 have an interference fit which holds the components of the rotor assembly 12 in place in at least a radial direction. In some embodiments, the interference fit between the tapered outer shaft surface 32 and the tapered inner sleeve surface 34 is between about .005 inches and 0.015 inches (0.13 - 0.38 mm), and the taper of the tapered outer shaft surface 32 is about 0.2 degrees. In other embodiments, the taper may be, for example 0.5 degrees or 0.75 degrees. The tapered geometry allows an interference fit between the components of the rotor assembly 12 to be achieved without the use of thermal expansion. On the other hand, cooling the rotor shaft 30, e.g. as low as minus 300 degree Fahrenheit (-180 °C), will aid the assembly process and can significantly reduce assembly forces.

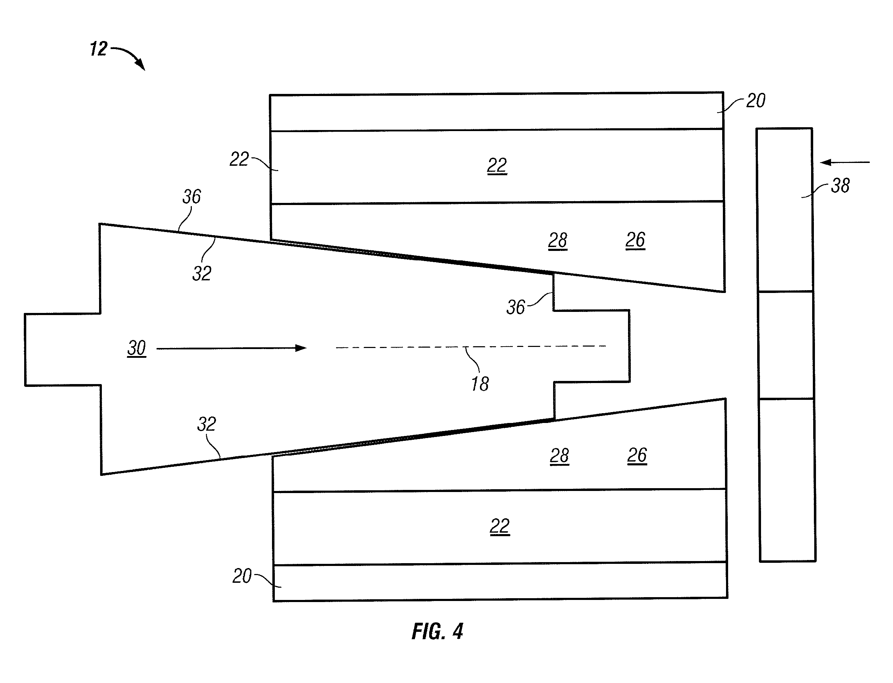

In some embodiments, as shown in FIG. 4, the rotor assembly 12 may include an end cap 38 at one or more axial ends of the rotor assembly 12 to further retain the components of the rotor assembly 12 in an axial direction. The end cap 38 may be press fit radially inboard of the outer sleeve 20.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A rotor assembly for an electric machine comprising:
an outer sleeve;
a plurality of permanent magnets disposed in the outer sleeve;
an inner sleeve disposed inboard of the plurality of permanent magnets including a plurality of inner sleeve segments that form a tapered inner sleeve surface; and
a rotor shaft disposed inboard of the inner sleeve having a tapered outer shaft surface engageable with the tapered inner sleeve surface in an interference fit to force the plurality of inner sleeve segments into engagement with the plurality of permanent magnets.

2. The rotor assembly of Claim 1, wherein the outer shaft surface is tapered at less than 1 degree, along an axial length of the rotor shaft.

3. The rotor assembly of Claim 1 or 2, further comprising a friction-reducing coating on the inner sleeve.

4. The rotor assembly of Claim 1, 2 or 3, wherein the plurality of inner sleeve segments comprises 10 or more inner sleeve segments; preferably
wherein the plurality of inner sleeve segments comprises between about 10 and about 20 inner sleeve segments.

5. The rotor assembly of Claim 1, 2, 3 or 4, wherein the plurality of permanent magnets comprises 20 or more permanent magnets; preferably
wherein the plurality of permanent magnets comprises between 20 and 40 permanent magnets.

6. The rotor assembly of any preceding Claim, wherein the plurality of inner sleeve segments are arranged to form a substantially annular shape.

7. The rotor assembly of any preceding Claim, wherein the outer sleeve is formed of a material with low coefficient of thermal expansion; preferably wherein the outer sleeve is formed from carbon fiber or other composite material.

8. The rotor assembly of any preceding Claim, further comprising:
an end cap at one or more axial end of the rotor assembly.

9. A method of assembling a rotor for an electric machine comprising:
arranging a plurality of permanent magnets inside of an annular outer sleeve;
arranging a plurality of inner sleeve segments in the outer sleeve radially inward of the plurality of permanent magnets, the inner sleeve segments having a tapered inner sleeve surface;
urging a rotor shaft into the outer sleeve from one axial end of the outer sleeve;
engaging a tapered outer shaft surface of the rotor shaft with the tapered inner sleeve surface thereby urging the inner sleeve segments radially outwardly; and
retaining the plurality of permanent magnets in the outer sleeve via the engagement between the outer shaft surface and the inner sleeve surface.

10. The method of Claim 9, further comprising affixing an end cap to one or more axial ends of the rotor assembly.

11. The method of Claim 9 or 10, wherein the outer shaft surface is tapered at less than about 1 degree along an axial length of the rotor shaft.

12. The method of Claim 9, 10 or 11, further comprising applying a friction-reducing coating to at least one of the plurality of inner sleeve segments and the rotor shaft.

13. The method of Claim 9, 10, 11 or 12, wherein the plurality of inner sleeve segments comprises 10 or more inner sleeve segments.

14. The method of any of Claims 9 to 13, wherein the plurality of permanent magnets comprises between 20 or more permanent magnets.

15. The method of any of Claims 9 to 14, wherein the outer sleeve is formed of a material with a low coefficient of thermal expansion; preferably
wherein the outer sleeve is formed of carbon fiber or other composite material.
